# EUROPEAN PATENT SPECIFICATION

(11) **EP 3 137 297 B1**
(45) Date of publication and mention of the grant of the patent: **05.12.2018**
(21) Application number: 15720924.8
(22) Date of filing: 21.04.2015
(51) Int. Cl.: B32B 27/08, B32B 27/32, B32B 1/08, F16L 9/12, F16L 9/133, F16L 11/04

(54) **MULTI LAYER PIPE WITH INCREASED ABRASION RESISTANCE**
MEHRSCHICHTIGES ROHR MIT ERHÖHTER ABRIEBFESTIGKEIT
TUYAU MULTICOUCHE À RÉSISTANCE À L'ABRASION ACCRUE

(30) Priority: 29.04.2014 EP 14166414
(43) Date of publication of application: 08.03.2017
(73) Proprietor: SABIC Global Technologies B.V., 4612 PX Bergen op Zoom (NL)
(72) Inventor: ENGELS, Carolus Johannes Augustinus, NL-6160 GA Geleen (NL); HANDSTANGER, Ralph Arthur, NL-6160 GA Geleen (NL)
(74) Representative: Sabic Intellectual Property Group
(86) International application number: PCT/EP2015/058581
(87) International publication number: WO 2015/165771

(56) References cited:
- EP-A1- 1 524 108
- WO-A1-02/078952
- WO-A1-2010/051419
- "TIPOLEN BRALEN PRODUCT CATALOGUE LOW DENSITY POLYETHYLENE", , 1 April 2014 (2014-04-01), XP055144128, Retrieved from the Internet: URL:http://www.slovnaft.sk/en/business_cen tre/polymers/products/tvk_ldpe/ [retrieved on 2014-10-02]

## Description

The invention is directed to a multi-layer pipe comprising a layer of high density polyethylene.

High density polyethylene pipe materials can be produced by using low pressure polymerisation processes. For example, pipe materials of the performance class PE 80 and PE 100 are generally produced in cascade plants by a so called bimodal or multimodal process. The production processes for bimodal high density polyethylene (HDPE) are summarised at pages 16-20 of "PE 100 Pipe systems" (edited by Bromstrup; second edition, ISBN 3-8027-2728-2). Suitable low pressure processes are slurry cascade of stirred reactors, slurry cascade of loop reactors and a combination of different processes such as slurry loop gas phase reactor. It is also possible to use a multimodal polyethylene, preferably trimodal polyethylene, as described for example in WO2007003530, as high density polyethylene pipe material.

The performance classes PE 80 and PE 100 are discussed at pages 35-42 of "PE 100 Pipe systems" (edited by Bromstrup; second edition, ISBN 3-8027-2728-2).The quality test methods are described at pages 51-62 of "PE 100 Pipe systems".

The production of bimodal high density polyethylene (HDPE) via a low pressure slurry process is described by Alt et al. in "Bimodal polyethylene-Interplay of catalyst and process" (Macromol.Symp. 2001, 163, 135-143). In a two stage cascade process the reactors may be fed continuously with a mixture of monomers, hydrogen, catalyst/co-catalyst and hexane recycled from the process. In the reactors, polymerisation of ethylene occurs as an exothermic reaction at pressures in the range between for example 0.5 MPa (5 bar) and 1MPa (10 bar) and at temperatures in the range between for example 75 °C and 85 °C. The heat from the polymerisation reaction is removed by means of cooling water. The characteristics of the polyethylene are determined amongst others by the catalyst system and by the applied concentrations of catalyst, co monomer and hydrogen.

The concept of the two stage cascade process is elucidated at pages 137-138 by Alt et al. "Bimodal polyethylene-Interplay of catalyst and process" (Macromol.Symp. 2001, 163). The reactors are set up in cascade with different conditions in each reactor including low hydrogen content in the second reactor. This allows for the production of HDPE with a bimodal molecular mass distribution and defined co monomer content in the polyethylene chains.

Multilayer pipes composed of various materials may improve partially the properties of a pipes system and are frequently used in praxis. It is very important to select a specific suitable type of polymer to be applied in each layer of the pipe because unfortunately, in practice the selection can result in for example in reduced lifetime, to brittle failure of the whole system or to failure due to slow crack growth (SCG) at a flaw in the pipe after a long time.

In industrial and municipal fields of application pipes made of polyethylene are used for the transport of many different media from drinking water to contaminated sewage and chemical and physical mixtures and gases or slurries or other multiphase systems. Slurry pipelines are applied to transport for example coarse and fine sand, coal, clay, phosphate, limestone and stone and rock fragments.

An important technical field for these slurry pipes is the mining operation as described for example in WO 2010051419. Mining operations require the transport of highly abrasive particulate or slurry streams containing for example iron ore, coal and coal dust. Often, metal pipes, such as carbon steel or cast iron pipes, are used for the transport of these highly abrasive streams. They may be expensive, prone to corrosion, heavy and only provide a temporary solution since they are eventually destroyed. Use of plastic pipes, pipe liners and pipe coatings has been proposed to reduce these shortcomings. The material selection is critical because many materials cannot stand up to such highly-abrasive mining streams and are quickly worn out. For example, high density poly ethylene pipes can be used as liners for sanitary sewer and wastewater pipelines but they may degrade under highly abrasive conditions resulting in a shorter service lifetime. Corrosion, erosion and abrasion are problems that must be taken into account when designing slurry pipelines. WO 2010051419 discloses multilayer polyolefin pipe concepts with tie layers wherein the outside layer preferably comprises rubbers, elastomers or ionomer terpolymers. WO 2010051419 discloses furthermore concepts directed to fibre reinforced polyolefin pipes and polyolefin lined metal pipe. WO 2010051419 summarizes prior art disclosing potential solutions for the continuous need to improve the abrasion resistance of polyolefin based pipes. More information about abrasion resistance is disclosed at page 29 of "PE 100 Pipe systems" (edited by Bromstrup; second edition, ISBN 3-8027-2728-2).

Budinski et al disclose in "Resistance to particle abrasion of selected plastics" (Wear 203-204; 1997; 302-309) that ultra-high molecular weight polyethylene and polyurethane are the best polymers for obtaining abrasion resistant properties. These polymers cannot be applied for the production of HDPE pipes because UHMWPE cannot be extruded as coex layer and there exist conversion process problems when added to polyethylene layers (gels, poor mixing and/or viscosity increase).

It is the object of the present invention to provide a HDPE based slurry pipe which has improved abrasion resistance in combination with other requirements such as a high internal pressure time to failure, outstanding resistance to slow crack growth and good resistance to rapid crack propagation.

The multi-layer pipe according to the invention comprises at least
I. a first layer comprising at least 65 % by weight of high density polyethylene and
II. a second layer comprising polyethylene with a polymer density ≥ 900 kg/m³ and ≤ 948 kg/m³ and a Melt Flow Rate 190/2.16 in the range ≥ 0,01 and ≤ 400 g/10 min
wherein the first layer is the outside layer of the pipe and the second layer is the inner layer of the pipe and
wherein the high density polyethylene of the first layer is a natural grade HDPE having a polymer density ≥ 940 and ≤ 955 kg/m³ and Melt Flow Rate 190/5 in the range ≥ 0,1 and ≤ 4 g/10 min (measured according to ISO1133-1 (190 °C; 5 kg) or the high density polyethylene of the first layer is a compound comprising HDPE and pigment having a density in the range ≥ 947 and ≤ 965 kg/m³ and Melt Flow Rate 190/5 in the range ≥ 0,1 and ≤ 4 g / 10 min and
wherein the pipe is a slurry pipe.

The density is measured according to ISO 1183 A.

The Melt Flow Rate (MFR) 190/2.16 is measured according to ISO 1133 -1(190 °C; 2.16 kg).

The Melt Flow Rate (MFR) 190/5 is measured according to ISO 1133 -1(190 °C; 5 kg).

The pipe according to the present invention may be a pressure pipe or a non-pressure pipe.

The preferred pipe is a pressure pipe.

The multi-layer pipe according to the present invention results in an improvement of the abrasion resistance while maintaining the other required characteristics of the pipe.

According to a preferred embodiment of the invention in the second layer the Melt Flow Rate 190/2.16 of the polymer is in the range between ≥ 0, 1 and ≤ 20 g/10 min.

According to a preferred embodiment of the invention the second layer comprises polyethylene with a polymer density ≥ 900 kg/m³ and ≤ 948 kg/m³ and a Melt Flow Rate 190/2.16 in the range ≥ 0,1 and ≤ 20 g/10 min.

According to a preferred embodiment of the invention the polymer density of the second layer ranges between ≥ 915 kg/m³ and ≤ 948 kg/m³.

According to a preferred embodiment of the invention the polymer density of the second layer ranges between ≥ 920 kg/m³ and ≤ 948 kg/m³.

According to another preferred embodiment of the invention the polymer density of the second layer ≤ 935 kg/m³.

According to another preferred embodiment of the invention the polymer density of the second layer ranges between ≥ 918 kg/m³ and ≤ 935 kg/m³.

According to a further preferred embodiment of the invention the polymer density of the second layer is ≥ 922 kg/m³ and ≤ 935 kg/m³.

According to a further preferred embodiment of the invention the second layer comprises polyethylene with a polymer density ≥ 920 kg/m³ and ≤ 948 kg/m³ and a Melt Flow Rate 190/2.16 in the range ≥ 0,1 and ≤ 20 g/10 min.

According to a preferred embodiment of the invention the Melt Flow Rate 190/2.16 of the polymer in the second layer is in the range between ≥ 0,1 and ≤ 3.0 g/10 min.

According to a further preferred embodiment of the invention the Melt Flow Rate 190/2.16 of the polymer in the second layer is in the range between ≥ 0,1 and ≤ 1.7 g/10 min.

If desired, the inner layer may comprise a colorant or pigment.

According to a further preferred embodiment of the invention the high density polyethylene of the first layer is a natural grade HDPE having a polymer density ≥ 940 and ≤ 955 kg/m³ and Melt Flow Rate 190/5 in the range ≥ 0,1 and ≤ 1 g/10 min or the high density polyethylene of the first layer is a compound comprising HDPE and a pigment having a density in the range ≥ 947 and ≤ 965 kg/m³ and Melt Flow Rate 190/5 in the range ≥ 0,1 and ≤ 1 g/10 min.

The HDPE in the first layer may be a natural grade and the HDPE in the first layer may also be a compound comprising a natural grade HDPE and carbon black or another colorant or pigment as desired for specific industrial applications. The pigment may be for example coloured black, blue or orange.

PE100 can be for example a compound comprising coloured black. The pigments blue and orange are used for drinking water and gas only. Non-PE100 HDPE can be natural and can have any colour.

The weight amount of at least ≥ 65 % by weight of high density polyethylene in the first layer is relative to the total amount of polymer in the first layer.

More preferable the weight amount of HDPE in the first layer ranges between 80% and 100 % by weight relative to the total amount of polymer in that layer.

According to a further preferred embodiment of the invention the weight amount of HDPE in the first layer is 100 % by weight relative to the total amount of polymer in that layer.

Examples of suitable HDPE in the first layer include for example a unimodal or bimodal PE 80, a bimodal PE 100 or a multimodal HDPE resin. PE 80 is a PE material with an MRS (minimum required strength after 50 years for water at 20 degrees Celsius) of 8 MPa and PE 100 is a PE material with an MRS of 10 MPa. The pipe classification is elucidated at page 35 of "PE 100 Pipe systems" (edited by Bromstrup; second edition, ISBN 3-8027-2728-2).

A preferred HDPE natural grade in the first layer has the following characteristics:
- polymer density between ≥ 940 and s 955 kg/m³ and
- MFR 190/5 between ≥ 0,1 and ≤ 4 g / 10 min.

According to a further preferred embodiment of the invention the HDPE natural grade in the first layer has the following characteristics:
- polymer density between ≥ 940 and ≤ 955 kg/m³ and
- MFR 190/5 between ≥ 0,1 and ≤ 1 g / 10 min.

A preferred pigment is carbon black. A HDPE compound comprising a carbon black content of between 2 and 2,5 % as typically used for black HDPE pressure pipe compounds adds about 10 kg/m³ in density to the natural polymer. In that case the density of the HDPE may range between 950 and 965 kg/m³.

According to a preferred embodiment of the invention HDPE or HDPE with pigments has the following characteristics:
- Tensile modulus between ≥ 500 and ≤ 1400 MPa (according to ISO 527-2)
- Yield stress between ≥ 15 and ≤ 32 MPa (according to ISO 527-2)
- Full Notch Creep Test (FNCT): 100 - 20000 h (according to ISO 16770 @ 80 °C/4 MPa)
- Charpy between ≥ 10 and ≤ 35°C @ 23 °C (according to ISO 1eA).

According to a further preferred embodiment of the invention HDPE or HDPE with pigments has the following characteristics:
- Tensile modulus between ≥ 700 and ≤ 1200 MPa (according to ISO 527-2)
- Yield stress between ≥ 18 and ≤ 28 MPa (according to ISO 527-2)
- Full Notch Creep Test (FNCT): 100 - 20000 h (according to ISO 16770 @ 80 °C/4 MPa)
- Charpy between ≥ 14 and ≤ 30°C @ 23 °C (according to ISO 1eA).

HDPE may comprise a comonomer for example butene or hexene.

The second layer has a polymer density ≥ 900 kg/m³ and ≤ 948 kg/m³. The second layer may comprise as the polymer linear low density polyethylene, low density polyethylene, high density polyethylene or medium density polyethylene. The end density of the material ranging between 900 and 948 kg/m³ can also be achieved by blending polyethylene grades for example LLDPE, LDPE with MDPE or HDPE or plastomers.

Preferably the polymer in the second layer is selected from linear low density polyethylene and low density polyethylene.

Most preferably linear low density polyethylene is applied.

According to a preferred embodiment of the invention the second layer comprises linear low density polyethylene having a polymer density between ≥ 915 and ≤ 935 kg/m³ and MFR 190/2.16 between ≥ 0,1 and ≤ 3.0 g/10 min.

According to a preferred embodiment of the invention the second layer comprises linear low density polyethylene having a polymer density between ≥ 920 and ≤ 935 kg/m³ and MFR 190/2.16 between ≥ 0,3 and ≤ 3.0 g/10 min.

According to another preferred embodiment of the invention the second layer consists of linear low density polyethylene as polymer.

The thickness of the outer layer depends on the intended service pressure. The thickness of the inner layer depends on the nature of slurry, service conditions (for example flow speed and temperature) and the required lifetime.

Preferably the total layer comprises between 70 and 95 % of the outer layer and between 5 and 30 % of the inner layer.

The total thickness of the two layer pipe may range between ≥ 3 mm and ≤ 150 mm.

Preferably the first layer has a layer thickness between ≥ 2, 1 mm and ≤142,5 mm.

Preferably the second layer has a layer thickness between ≥ 0, 15 mm and ≤ 45 mm.

According to a preferred embodiment of the invention the two layer pipe according to the invention has a total thickness of the two layer pipe ranging between ≥ 3 mm and ≤ 150 mm, wherein the first layer has a layer thickness between ≥ 2.1 mm and ≤ 142.5 mm and wherein the second layer has a layer thickness between ≥ 0.15 mm and ≤45 mm.

The selection of the thickness depends amongst others from the pressure category and the diameter of the pipe.

The multilayer concept according to the invention does not require the presence of a tie layer, fibres or abrasion resistant fillers.

The main benefit of the second layer is the improvement of the abrasion resistance. The polyethylene, for example LLDPE, in the second layer as inner layer protects the HDPE outer layer (necessary for the pressure resistance) from abrasion by for example slurries.

The second layer is an additional layer to the pipe, for example pressure pipe, and does not significantly contribute to the structural stability of the pipe. The outer layer assures the mechanical integrity of the pipe. LLDPE or LDPE in the second layer may be applied as inner coex layer for high abrasion resistance pipes.

If desired for a specific application the polymer composition of each layer may also contain appropriate amounts of other additives such as for example fillers, antioxidants, pigments, stabilisers, antistatic agents and polymers.

The multi-layer pipe according to the invention may comprise more than 2 layers for example 3 and 5 layers. If desired for a specific application it is possible to divide each layer in more layers to obtain specific properties of each layer. It is also possible to include layers containing other polymers for example polypropylene for protection of the outside layer.

The production processes of HOPE and LLDPE are summarised in Handbook of Polyethylene by Andrew Peacock (2000; Dekker; ISBN 0824795466) at pages 43-66.

The technologies suitable for the LLDPE manufacture include gas-phase fluidized-bed polymerization, polymerization in solution, polymerization in a polymer melt under very high ethylene pressure, and slurry polymerization. The linear low density polyethylene component of the composition is a low density polyethylene copolymer comprising ethylene and a C₃-C₁₀ alpha-olefin co monomer. Suitable alpha-olefin co monomers include butene, hexene, 4-methyl pentene and octene. The preferred co monomer is hexene.

The manufacture of pipes is described for example at pages 43-44 of "PE 100 Pipe systems" (edited by Bromstrup; second edition, ISBN 3-8027-2728-2). The extruded pipe according the invention is produced from HDPE in molten state and the multi-layer structure may be produced in one step process through coextrusion.

The slurry pipelines according to the invention are suitable to transport a mixture of for example liquids and solids. Solids may be for example course and fine sand, coal, clay, phosphate, iron, limestone or stone and rock fragments. It is also possible to transport organic matter for example seafood and fish or animal food. In general the slurry pipes may transport contaminated sewage and chemical and physical mixtures and gases or slurries or other multiphase systems.

WO02/078952 is directed to multilayer tubes of polyolefine for inside and outside water conduit piping and draining systems in civil engineering also as protection components of cable distribution systems, in chemical and food industry as well as piping systems of fluid and gas conveying in many industrial branches. WO02/078952 is not directed to slurry pipes to transport course and fine sand, coal, clay, phosphate and limestone and mining operations which require the transport of highly abrasive particulate or slurry streams containing for example iron ore, coal and coal dust. Another feature of WO02/078952 is recycling of polyolefine remainders and scrap utilized for tubes production. WO02/078952 discloses a multi-layer tube polyolefine designated by at least two layers where inner layer (i) of the tube is of polyolefine selected of group consisting of low density polyethylene (a) of density 0,910 up to 0,930 g/cm³, linear low density polyethylene (b) of 0,915 up to 0,940 g/cm³, high density polyethylene (c) of 0,940 up to 0,975 g/cm³ density and isotactic polypropylene (d) and the second layer (ii) outwards of the center line of tube is mixture of polyolefines containing 50 % of mass polyolefin elements, which creates inner layer of tube and at most 50 % low density polyethylene (a) of 0,910 up to 0,930 g/cm³ density and/or linear low density polyethylene (b) of 0,915 up to 0, 940 g/cm³ and/or high density polyethylene (c) of 0,940 up to 0,975 g/cm³ density and/or isotactic polypropylene (d).

EP1524108B discloses a multi-layered pipe made from heat-deformable plastic, comprising at least two layers in which a first layer forms an outer layer and another layer forms an inner layer, which layers are made from HDPE as a base material and the outer layer has a scratch resistance that is 20% higher than that of a standard pressure pipe material and the inner layer has a stress crack resistance that is higher than a standard pressure pipe material. The outer layer is crosslinked and modified with a layered silicate as a mineral filler. The inner layer of the pipe is based on PE 100 or higher. The density of PE 100 is higher than 948 kg/m³. EP1524108B is directed to a pipe having an inner layer with high stress crack resistance and an outer layer with high scratch resistance. EP1524108B does not refer to abrasion resistance. EP1524108B is not directed to slurry pipes.

The invention will be further elucidated by the following non-restrictive example.

### Example I

A two layer pipe having a thickness of 22, 7 mm was composed as follows:
- the first layer has a thickness of 18,16 mm and comprises 100 % by weight high density polyethylene (carbon black compound) and
- the second layer has a thickness of 4,54 mm and comprises 100 % by weight linear low density polyethylene.

The applied polyethylenes were:
- high density polyethylene(HDPE): SABIC grade Vestolen A 6060R having a density of 959 kg/m³ (black compound density) and MFR 5kg/190 °C of 0,3 g/10 minutes
- linear low density polyethylene (LLDPE) : SABIC grade LLDPE 6821NE having a density of 921 kg/m³ and MFR 2.16 kg/190 °C of 0,8 g/10 minutes.

A slurry comprising 80 vol % water and 20 vol % sand with mean grain size 700 micrometres was used with a velocity of 8 m/s at a temperature of 20 degrees Celsius during 6 hours to measure the average volume loss of LLDPE. The average volume loss of the LLDPE layer was 13 mm³.

### Example II

Example I was repeated with the exception that SABIC grade LLDPE 118NE having a density of 918 kg/m³ and MFR 2.16 kg/190 °C of 1 g/10 minutes was applied instead of SABIC grade LLDPE 6821NE.
The average volume loss of the LLDPE layer was 15 mm³.

### Comparative Example A

Example I was repeated with the exception that no LLDPE layer was applied. The average volume loss of the HDPE layer was 35 mm³.

## Claims

1. A multi-layer pipe comprising
I. a first layer comprising at least 65 % by weight of high density polyethylene
II. a second layer comprising polyethylene with a polymer density ≥ 900 kg/m³ and ≤ 948 kg/m³ (measured according to ISO 1183A) and a Melt Flow Rate 190/2.16 in the range ≥ 0,01 and ≤ 400 g/10 min (measured according to ISO 1133 -1(190 °C; 2.16 kg)).
wherein the first layer is the outside layer of the pipe and the second layer is the inner layer of the pipe,
wherein the high density polyethylene of the first layer is a natural grade HDPE having a polymer density ≥ 940 and ≤ 955 kg/m³ and Melt Flow Rate 190/5 in the range ≥ 0,1 and ≤ 4 g / 10 min (measured according to ISO1133-1 (190 °C; 5 kg) or the high density polyethylene of the first layer is a compound comprising HDPE and pigment having a density in the range ≥ 947 and ≤ 965 kg/m³ and Melt Flow Rate 190/5 in the range ≥ 0,1 and ≤ 4 g /10 min and
wherein the pipe is a slurry pipe.

2. A multi-layer pipe according to Claim 1 comprising a second layer comprising polyethylene with a density ≥ 915 kg/m³ and ≤ 948 kg/m³.

3. A multi-layer pipe according to any one of Claims 1-2 comprising a second layer comprising polyethylene with a polymer density ≥ 918 kg/m³ and ≤ 935 kg/m³.

4. A multi-layer pipe according to any one of Claims 1-3 comprising a second layer wherein the Melt Flow Rate 190/2.16 of the polymer is in the range between ≥ 0, 1 and ≤ 20 g/10 min.

5. A multi-layer pipe according to any one of Claims 1-4 comprising a second layer wherein the Melt Flow Rate 190/2.16 of the polymer is in the range between ≥ 0, 1 and ≤ 3 g/10 min.

6. A multi-layer pipe according to any one of Claims 1-5 comprising a second layer comprising linear low density polyethylene or low density polyethylene.

7. A multi-layer pipe according to Claim 6 comprising a second layer comprising linear low density polyethylene.

8. A multi-layer pipe according to any one of Claims 1-7 wherein the second layer consists of linear low density polyethylene.

9. A multi-layer pipe according to any one of Claims 1-8 wherein the pigment is carbon black.

10. A multi-layer pipe according to any one of Claims 1- 9 wherein HDPE or compound comprising HDPE and pigment has the following characteristics:
- Tensile modulus between ≥ 500 and ≤ 1400 MPa (according to ISO 527-2)
- Yield stress between ≥ 15 and ≤ 32 MPa (according to ISO 527-2)
- Full Notch Creep Test (FNCT): 100 - 20000 h (according to ISO 16770 @ 80 °C/4 MPa) and
- Charpy between ≥ 10 and ≤ 35°C @ 23 °C (according to ISO 1eA).

11. A two layer pipe according to any one of Claims 1-10 wherein the total thickness of the two layer pipe ranges between ≥ 3 mm and ≤ 150 mm , wherein the first layer has a layer thickness between ≥ 2.1 mm and ≤ 142.5 mm and wherein the second layer has a layer thickness between ≥ 0.15 mm and ≤45 mm.

## Patentansprüche

1. Mehrschichtiges Rohr umfassend
I. eine erste Schicht umfassend mindestens 65 Gew.-% Polyethylen hoher Dichte
II. eine zweite Schicht umfassend Polyethylen mit einer Polymerdichte ≥ 900 kg/m³ und ≤ 948 kg/m³ (ISO 1183A entsprechend gemessen) und einem Schmelzflussindex 190/2.16 im Bereich von ≥ 0,01 und ≤ 400 g/10 min (ISO 1133-1 (190 °C; 2,16 kg) entsprechend gemessen),
wobei die erste Schicht die Außenschicht des Rohrs ist und die zweite Schicht die Innenschicht des Rohrs ist,
wobei das Polyethylen hoher Dichte der ersten Schicht ein HDPE natürlicher Güte ist, das eine Polymerdichte ≥ 940 kg/m³ und ≤ 955 kg/m³ und einem Schmelzflussindex 190/5 im Bereich von ≥ 0,1 und ≤ 4 g/10 min (ISO 1133-1 (190 °C; 5 kg) entsprechend gemessen) aufweist
oder das Polyethylen hoher Dichte der ersten Schicht eine Verbindung ist, die HDPE und Pigment umfasst und eine Dichte im Bereich von ≥ 947 kg/m³ und ≤ 965 kg/m³ und einem Schmelzflussindex 190/5 im Bereich von ≥ 0,1 und ≤ 4 g/10 min aufweist und wobei das Rohr ein Aufschlämmungsrohr ist.

2. Mehrschichtiges Rohr nach Anspruch 1, umfassend eine zweite Schicht umfassend Polyethylen mit einer Dichte ≥ 915 kg/m³ und ≤ 948 kg/m³.

3. Mehrschichtiges Rohr nach einem der Ansprüche 1-2, umfassend eine zweite Schicht umfassend Polyethylen mit einer Polymerdichte ≥ 918 kg/m³ und ≤ 935 kg/m³.

4. Mehrschichtiges Rohr nach einem der Ansprüche 1-3, umfassend eine zweite Schicht, wobei der Schmelzflussindex 190/2.16 des Polymers im Bereich zwischen ≥ 0,1 und ≤ 20 g/10 min liegt.

5. Mehrschichtiges Rohr nach einem der Ansprüche 1-4, umfassend eine zweite Schicht, wobei der Schmelzflussindex 190/2.16 des Polymers im Bereich zwischen ≥ 0,1 und ≤ 3 g/10 min liegt.

6. Mehrschichtiges Rohr nach einem der Ansprüche 1-5, umfassend eine zweite Schicht umfassend lineares Polyethylen niedriger Dichte oder Polyethylen niedriger Dichte.

7. Mehrschichtiges Rohr nach Anspruch 6, umfassend eine zweite Schicht umfassend lineares Polyethylen niedriger Dichte.

8. Mehrschichtiges Rohr nach einem der Ansprüche 1-7, wobei die zweite Schicht aus linearem Polyethylen niedriger Dichte besteht.

9. Mehrschichtiges Rohr nach einem der Ansprüche 1-8, wobei da Pigment Ruß ist.

10. Mehrschichtiges Rohr nach einem der Ansprüche 1-9, wobei HDPE oder die Verbindung, die HDPE und Pigment umfasst, die folgenden charakteristischen Eigenschaften aufweist:
- Zugmodul zwischen ≥ 500 und ≤ 1400 MPa (ISO 527-2 entsprechend)
- Streckspannung zwischen ≥ 15 und ≤ 32 MPa (ISO 527-2 entsprechend)
- Full Notch Creep Test (FNCT): 100 - 20000 h (ISO 16770 @ 80 °C/4 MPa entsprechend) und
- Charpy zwischen ≥ 10 und ≤ 35 °C (ISO 1eA entsprechend).

11. Zweischichtiges Rohr nach einem der Ansprüche 1-10, wobei die Gesamtdicke des zweischichtigen Rohrs im Bereich zwischen ≥ 3 mm und ≤ 150 mm li8egt, wobei die erste Schicht eine Schichtdicke zwischen ≥ 2,1 mm und ≤ 142,5 mm aufweist und wobei die zweite Schicht eine Schichtdicke zwischen ≥ 0,15 mm und ≤ 45 mm aufweist.

## Revendications

1. Tuyau multicouche, comprenant:
I. une première couche contenant au moins 65 % en poids de polyéthylène haute densité,
II. une seconde couche contenant du polyéthylène qui présente une densité de polymère ≥ 900 kg/m³ et ≤ 948 kg/m³ (mesurée selon la norme ISO 1183A) et un indice de fluidité 190/2,16 compris dans la gamme de ≥ 0,01 et ≤ 400 g/10 min (mesuré selon la norme ISO 1133 - 1(190°C; 2,16 kg)),
dans lequel la première couche est la couche extérieure du tuyau et la seconde couche est la couche intérieure du tuyau,
dans lequel le polyéthylène haute densité de la première couche est un HDPE de qualité naturelle qui présente une densité de polymère ≥ 940 et ≤ 955 kg/m³ et un indice de fluidité 190/5 compris dans la gamme ≥ 0,1 et ≤ 4 g / 10 min (mesuré selon la norme ISO 1133-1 (190°C, 5 kg), ou le polyéthylène haute densité de la première couche est un composé comprenant du HDPE et un pigment qui présente une densité comprise dans la gamme de ≥ 947 et ≤ 965 kg/m³ et un indice de fluidité 190/5 compris dans la gamme de ≥ 0,1 et ≤ 4 g / 10 min, et
dans lequel le tube est un tube à boue.

2. Tuyau multicouche selon la revendication 1, comprenant une seconde couche contenant du polyéthylène qui présente une densité ≥ 915 kg/m³ et ≤ 948 kg/m³.

3. Tuyau multicouche selon l'une quelconque des revendications 1 ou 2, comprenant une seconde couche contenant du polyéthylène qui présente une densité de polymère ≥ 918 kg/m³ et ≤ 935 kg/m³.

4. Tuyau multicouche selon l'une quelconque des revendications 1 à 3, comprenant une seconde couche, dans lequel l'indice de fluidité 190/2,16 du polymère est compris dans la gamme entre ≥ 0,1 et ≤ 20 g/10 min.

5. Tuyau multicouche selon l'une quelconque des revendications 1 à 4, comprenant une seconde couche, dans lequel l'indice de fluidité 190/2,16 du polymère est compris dans la gamme entre ≥ 0,1 et ≤ 3 g/10 min.

6. Tuyau multicouche selon l'une quelconque des revendications 1 à 5, comprenant une seconde couche contenant du polyéthylène linéaire à faible densité ou du polyéthylène à faible densité.

7. Tuyau multicouche selon la revendication 6, comprenant une seconde couche contenant du polyéthylène linéaire à faible densité.

8. Tuyau multicouche selon l'une quelconque des revendications 1 à 7, dans lequel la seconde couche est constituée de polyéthylène linéaire à faible densité.

9. Tuyau multicouche selon l'une quelconque des revendications 1 à 8, dans lequel le pigment est le noir de carbone.

10. Tuyau multicouche selon l'une quelconque des revendications 1 à 9, dans lequel le HDPE ou le composé contenant du HDPE et un pigment présente les caractéristiques suivantes:
- un module d'élasticité compris entre ≥ 500 et ≤ 1400 MPa (selon la norme ISO 527-2),
- une limite d'élasticité comprise entre ≥ 15 et ≤ 32 MPa (selon la norme ISO 527-2),
- un essai de fluage sur éprouvette entièrement entaillée (FNCT): 100 à 20000 h (selon la norme ISO 16770 à 80 °C / 4 MPa), et
- une valeur Charpy comprise entre ≥ 10 et ≤ 35°C à 23°C (selon la norme ISO 1eA).

11. Tuyau à deux couches selon l'une quelconque des revendications 1 à 10, dans lequel l'épaisseur totale du tuyau à deux couches est comprise dans la gamme entre ≥ 3 mm et ≤ 150 mm, dans lequel la première couche présente une épaisseur de couche comprise entre ≥ 2,1 mm et ≤ 142,5 mm, et dans lequel la seconde couche présente une épaisseur de couche comprise entre ≥ 0,15 mm et ≤ 45 mm.
